## Europäisches Patentamt
## European Patent Office
## Office européen des brevets

(19)

(11) Numéro de publication : **0 043 299**
**B1**

(12)

# FASCICULE DE BREVET EUROPÉEN

(45) Date de publication du fascicule du brevet :
**05.09.84**

(21) Numéro de dépôt : **81400930.4**

(22) Date de dépôt : **12.06.81**

(51) Int. Cl.³ : **F 02 C 7/00**, F 01 D 25/18

(54) **Réservoir à suspension antivibratoire.**

(30) Priorité : **30.06.80 FR 8014499**

(43) Date de publication de la demande :
**06.01.82 Bulletin 82/01**

(45) Mention de la délivrance du brevet :
**05.09.84 Bulletin 84/36**

(84) Etats contractants désignés :
**DE FR GB**

(56) Documents cités :
**DE-A- 2 736 127**
**FR-A- 507 163**
**FR-A- 1 318 969**
**FR-A- 2 201 422**
**FR-E- 80 507**
**GB-A- 439 255**
**GB-A- 922 122**
**GB-A- 1 224 310**
**GB-A- 1 394 320**
**US-A- 2 481 547**

(73) Titulaire : **SOCIETE NATIONALE D'ETUDE ET DE CONSTRUCTION DE MOTEURS D'AVIATION, "S.N.E.C.M.A."**
**2 Boulevard Victor**
**F-75015 Paris (FR)**

(72) Inventeur : **Lojou, Yves Jean**
**6, rue des Moines**
**F-77310 Pringy (FR)**

(74) Mandataire : **Moinat, François et al**
**S.N.E.C.M.A. Service des Brevets Boîte Postale 81**
**F-91003 Evry Cedex (FR)**

EP 0 043 299 B1

## Description

L'invention concerne un réservoir à suspension antivibratoire et plus particulièrement un réservoir à huile destiné à être fixé sur le carter d'un turboréacteur.

Sur les turboréacteurs, le graissage est assuré par de l'huile en circulation qui sert en outre à évacuer la chaleur des éléments mobiles. La réserve d'huile doit être suffisante pour assurer un graissage correct des organes durant la mission de l'avion et doit être accessible lorsque l'avion est au sol de manière à permettre le complément de plein.

Lorsque la réserve d'huile est indépendante du carter des équipements, elle est dénommée « réservoir d'huile » et est suspendue au carter moteur. C'est une structure mince qui s'adapte à l'environnement moteur et nacelle. Outre les spécifications propres aux fonctions du réservoir d'huile comme source d'huile du système de lubrification, il doit répondre aux critères entre autres de durée de vie, de masse, d'accélération.

La durée de vie est en grande partie déterminée par les vibrations auxquelles il est soumis, vibrations qui occasionnent généralement sur des réservoirs soudés des ruptures de soudure, ou des criques de fatigue.

Ce problème ne semble pas jusqu'à présent avoir reçu de solutions spécifiques. C'est ainsi que le brevet français 2 201 422 décrit une fixation de réservoir d'huile qui comporte des supports tubulaires traversant le réservoir de part en part et radialement au carter sur lequel il doit être fixé. Ces supports assurent en premier lieu la fixation d'un entonnoir de désaération prévu dans le réservoir. Éventuellement des passages dans les supports tubulaires sont utilisés pour boulonner le réservoir sur le carter. D'autres éléments supports de fixation sont fixés au réservoir seulement par leur extrémité.

On ne retrouve pas, dans une telle disposition, de moyens permettant de protéger la structure des contraintes engendrées par les vibrations du support d'une part et par les déplacements brusques de la masse d'huile à l'intérieur du réservoir d'autre part.

Par ailleurs, le document DE-A-2 736 127 décrit un réservoir à suspension antivibratoire à carburant pour un tracteur agricole se présentant sous la forme d'un tronc de prismes quadrangulaire, constitué de deux grandes faces opposées, reliées par des faces latérales, inférieure et supérieure et comportant un organe de fixation à la partie supérieure et deux organes de fixation à la partie inférieure. Mais dans ce cas, notamment à la partie inférieure, les moyens de suspension sont situés à l'extérieur du réservoir.

Le réservoir selon l'invention remédie à ces inconvénients est caractérisé en ce que les faces supérieure et inférieure ont leurs axes longitudinaux parallèles à l'axe du turboréacteur, et les deux organes de fixation placés à la partie inférieure sont situés sur les faces latérales reliant les faces opposées, ces deux organes étant prévus aux extrémités d'un axe coopérant par des moyens de maintien élastique avec un passage tubulaire parallèle à la face voisine du carter et parallèle à l'axe du turboréacteur, ledit passage tubulaire étant fixé au réservoir et traversant celui-ci de part en part et lesdits moyens de maintien élastique étant constitués d'au moins deux manchons en matériaux élastiques, gainant l'axe et maintenus séparés par une entretoise tubulaire coulissant sur l'axe et munie de butées circulaires formant appui sur les surfaces d'extrémité des manchons, des moyens de déplacement axial des manchons et de l'entretoise étant prévus à une extrémité de l'axe.

On voit que les moyens élastiques, permettant une coopération souple entre les moyens de fixation et le passage tubulaire qui traverse de part en part le réservoir, assurent une protection efficace à l'égard des contraintes susceptibles d'être engendrées par les vibrations du support.

Selon une autre caractéristique importante de l'invention le réservoir porte au moins une cloison intérieure perpendiculaire aux grandes faces auxquelles elle est fixée comportant à sa partie inférieure une ouverture pour le passage tubulaire.

Les cloisons intérieures, qui jouent le rôle de raidisseur et de liaison avec le passage tubulaire, interviennent donc également pour limiter efficacement les volumes d'huile déplacés lors des mouvements de l'avion.

Les explications et figures, données ci-après à titre d'exemple, permettront de comprendre comment l'invention peut être réalisée.

La figure 1 montre, vue de côté, un réservoir selon l'invention, fixé au carter d'un turboréacteur,

la figure 2 est une vue en perspective, côté turboréacteur, d'un exemple de réalisation d'un réservoir,

la figure 3 est une vue en coupe de face d'un réservoir de la figure 2,

la figure 4 est une vue en coupe partielle selon IV-IV de la figure 3 à plus grande échelle montrant un exemple de réalisation des moyens de maintien élastique,

la figure 5 est une vue en coupe partielle selon IV-IV de la figure 3 à plus grande échelle montrant un deuxième exemple de réalisation des moyens de maintien élastique.

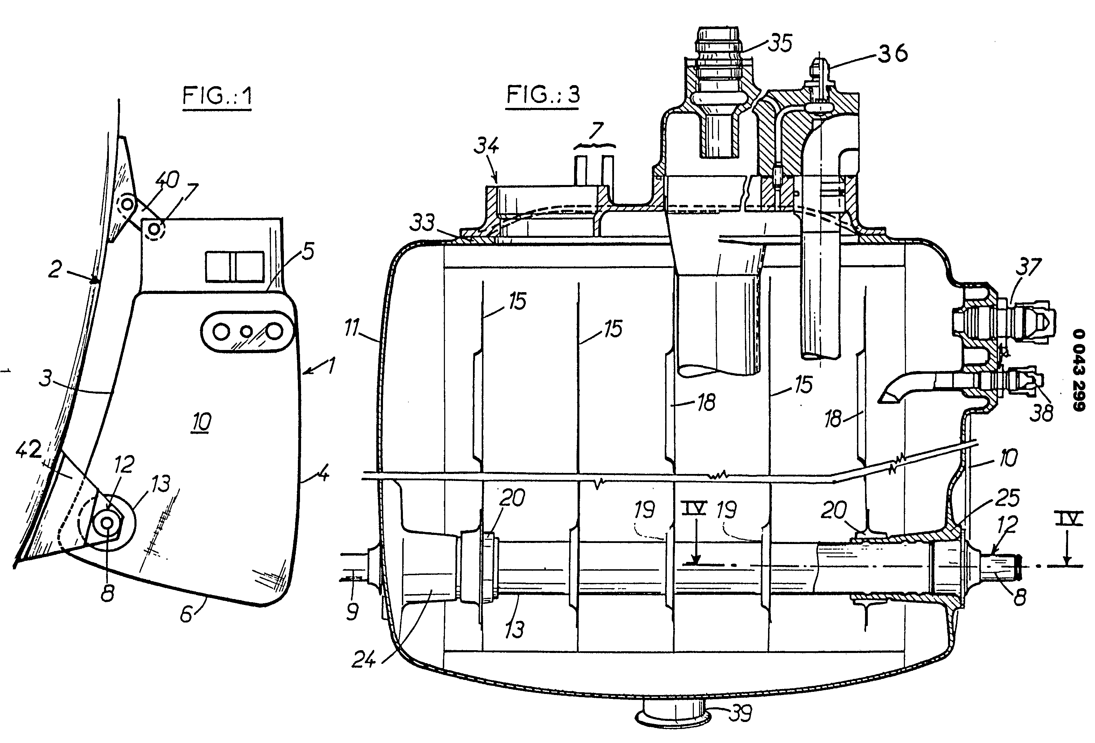

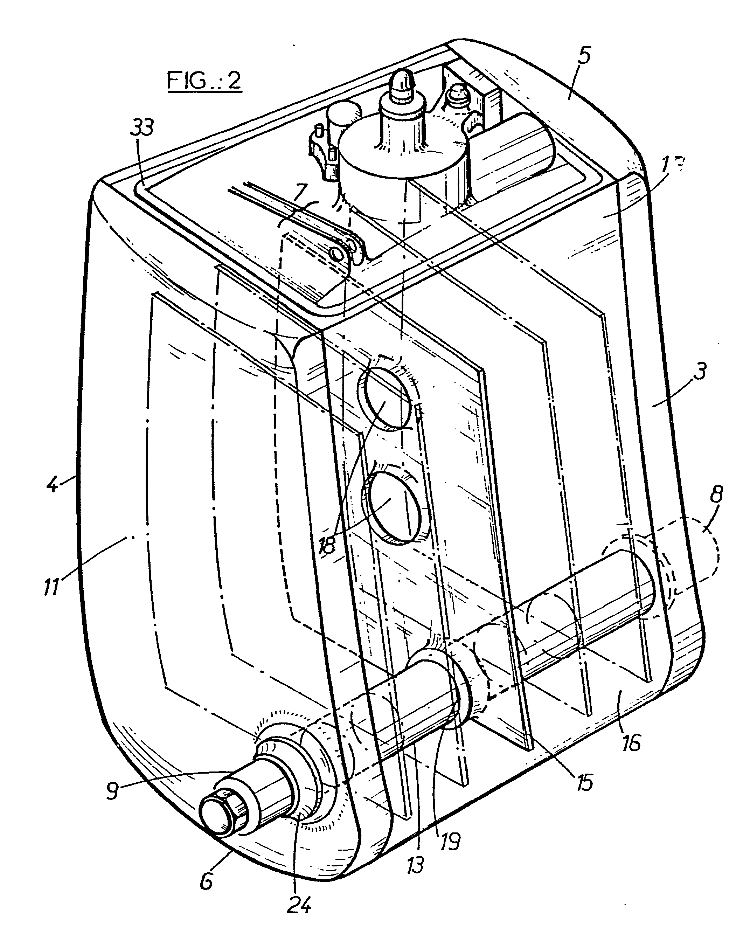

Les figures 1 et 2 représentent un réservoir d'huile 1 destiné à être fixé sur le carter 2 d'un turboréacteur. Le réservoir se présente sous la forme d'un volume s'inscrivant approximativement dans un tronc de prisme quadrangulaire. Les faces opposées 3 et 4 sont de relativement grandes dimensions par rapport aux autres et la face 3, voisine du carter 2, présente une surface courbe de rayon légèrement supérieur à celui du carter et concentrique à celui-ci. La face 4 présente également une courbure jouant le double rôle d'augmenter la rigidité de la paroi et de s'adapter à l'environnement turboréacteur cellule. Les faces supérieure 5 et inférieure 6 ont leurs axes longitudinaux parallèles à l'axe du turboréacteur qui est perpendiculaire au plan de la figure.

Le réservoir est fixé au carter par trois organes de fixation. Un des organes 7 est prévu à la partie supérieure du réservoir et les deux autres 8 et 9 à la partie inférieure des faces latérales 10 et 11. Les organes 8 et 9 sont portés par les extrémités d'un axe 12 qui traverse le réservoir par un passage 13 formé d'un tube, parallèle à la face 3 voisine du carter 2 et à l'axe du turboréacteur, fixé au moins par ses extrémités au réservoir. Cet axe 12 est maintenu dans le passage par des moyens de maintien élastique.

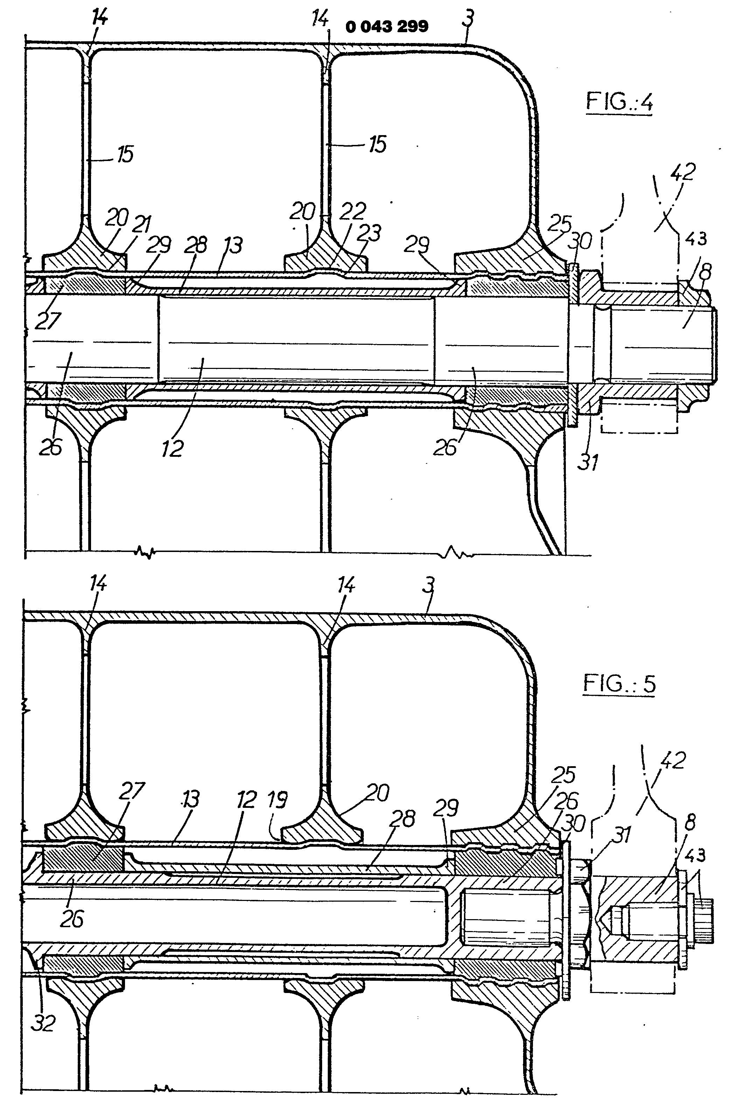

Selon la forme de réalisation du réservoir représenté figures 1 et 3, l'enveloppe est constituée d'éléments en alliage léger, par exeple en AG5 ou 6061 assemblé bout à bout par soudure. Les faces 3 et 4 du réservoir portent à l'intérieur des nervures 14 (figures 4 et 5) perpendiculaires, disposées en face les unes des autres. Aux extrémités des nervures sont fixées des cloisons 15 qui laissent à la partie inférieure et à la partie supérieure du réservoir des vides 16, 17 permettant l'équilibrage des niveaux d'huile dans les chambres constituées par les cloisons. Afin de permettre un allègement de l'ensemble et une meilleure circulation de l'huile, les cloisons sont percées de trous 18.

Chaque cloison porte à sa partie inférieure des ouvertures circulaires 19 pour le passage du tube 13. Au moins une ouverture reçoit une bague 20 dans laquelle passe et est fixé le tube de passage 13. Selon la réalisation représentée, la portée cylindrique 21 comporte dans sa partie médiane une gorge 22 qui coopère avec un renflement circulaire 23 du tube 13 formé, par exemple, par repoussage ou dudgeonnage après mise en place. Les extrémités du tube sont fixées de manière étanche dans deux bagues d'extrémité 24 et 25 portant également des gorges.

Selon la réalisation représentée, le réservoir est muni de cinq cloisons approximativement équidistantes et dont les ouvertures 19 portent chacune une bague 20. L'axe 12 dont les extrémités portent les organes de fixation 8 et 9 du réservoir est constitué (figures 4 et 5) d'un corps cylindrique au moins partiellement creux présentant des parties 26 de plus forte épaisseur ou collets. Les collets sont prévus à des distances correspondant au double de la distance séparant deux cloisons. Il y aura par conséquent deux collets intermédiaires entre ceux prévus aux extrémités de l'axe. Ces collets reçoivent des manchons élastiques 27 d'une longueur approximativement égale à celle des bagues 20, ces manchons sont maintenus en place par des entretoises tubulaires 28 portant à chacune de leurs extrémités une butée circulaire 29.

Les manchons élastiques coopérant avec les bagues d'extrémité 24 et 25 s'appuient vers l'intérieur sur les butées 29 de l'entretoise et vers l'extérieur contre un organe de pressage 30, par exemple une rondelle, qui est actionné par un écrou 31 coopérant avec un filetage prévu à la surface de l'axe, l'ensemble organe de pressage et écrou constituant des moyens de déplacement axial.

Dans la réalisation représentée figure 4 les manchons élastiques sont séparés les uns des autres par des entretoises 28, dans celle représentée figure 5, le manchon intérieur s'appuie contre une butée circulaire 32 prévue lors de l'usinage des collets 26, ou rapportée et fixée par un moyen connu.

L'axe 12 est maintenu dans le tube 13 par serrage, à ses deux extrémités, des écrous 31 agissant sur les rondelles 30 qui viennent comprimer directement ou indirectement (par les entretoises) les manchons élastiques, dont le diamètre augmente, contre la paroi du tube 13. Du fait de la disposition des manchons élastiques dans un même plan que les bagues, il n'y a pas de risques de déformation du tube 13.

Les organes de fixation 8, 9 du réservoir au carter du turboréacteur sont prévus pour coopérer avec des chapes 42 et 41 fixées directement ou indirectement sur le carter. Ils sont constitués de deux tourillons maintenus dans des chapes. Un point de fixation est fixe et un des tourillons est maintenu par des organes de serrage 43 constitués de manière connue par exemple par un écrou de blocage ou une rondelle de blocage et un boulon, l'autre a un jeu suffisant.

Les figures 2 et 3 montrent une réalisation d'un réservoir dans laquelle la face supérieure 5 présente une ouverture approximativement rectangulaire 33 dont le bord forme une surface d'appui. L'ouverture est fermée par un couvercle 34 portant les divers accessoires (35, 36) nécessaires à un bon fonctionnement du système de graissage, la jauge d'huile, etc... ainsi que la chape 7 constituant l'organe de fixation supérieur.

D'autres organes accessoires (37, 38, 39) sont disposés à divers endroits du réservoir.

Dans la réalisation du réservoir la chape 7 (point de fixation supérieure) reçoit une biellette à rotule 40 (figure 1), le tourillon 8 est maintenu fixe dans la chape fixée sur le carter et le tourillon 9 a un jeu suffisant dans la chape 41 (non représentée).

## Revendications

1. Réservoir à suspension antivibratoire et plus particulièrement réservoir à huile destiné à être fixé sur le carter d'un turboréacteur, se présentant sous la forme d'un volume inscrit approximativement dans un tronc de prisme quadrangulaire comportant deux grandes faces opposées (3, 4) dont l'une (3) est disposée concentriquement au carter et dans son voisinage, et reliées par des faces latérales (10, 11) et par des faces supérieure (5) et inférieure (6) ledit réservoir comportant un organe de fixation (7) à la partie supérieure du réservoir et deux organes de fixation (8, 9) à la partie inférieure caractérisé en ce que les faces supérieure (5) et inférieure (6) sont parallèles à l'axe du turboréacteur et les deux organes de fixation (8, 9) placés à la partie inférieure sont situés sur les faces latérales (10, 11) portés par les extrémités d'un axe (12) parallèle à l'axe du turboréacteur, traversant le réservoir de part en part, et coopérant par l'intermédiaire de moyens de maintien élastique avec un passage tubulaire (13) solidaire au moins des faces latérales (10, 11), lesdits moyens de maintien élastique étant constitués d'au moins deux manchons (27) en matériau élastique, gainant l'axe (12) et maintenus séparés par une entretoise tubulaire (28) coulissant sur l'axe (12) et munie de butées circulaires (29) formant appui sur les surfaces d'extrémité des manchons (27), des moyens de déplacement axial (30, 31) des manchons et de l'entretoise étant prévus à une extrémité de l'axe (12).

2. Réservoir selon la revendication 1, caractérisé en ce que les faces latérales (10, 11) portent des bagues cylindriques (25, 24) dans lesquelles passent et sont fixées les extrémités du passage tubulaire (13).

3. Réservoir selon la revendication 1, caractérisé en ce qu'il porte au moins une cloison intérieure (15) perpendiculaire aux grandes faces (3, 4), fixées sur des nervures (14) portées par les parois internes des grandes faces (3, 4) selon des plans perpendiculaires aux faces (3, 4), ladite cloison comportant à sa partie inférieure une ouverture (19) munie d'une bague cylindrique (20) dans laquelle passe et est fixé le passage tubulaire (13).

4. Réservoir selon la revendication 2 ou la revendication 3, caractérisé en ce que les manchons élastiques (27) sont de longueur approximativement égale à celle de la bague cylindrique et sont placés dans le passage tubulaire (13) au droit des bagues cylindriques (20 ; 25, 24).

5. Réservoir selon l'une des revendications précédentes, caractérisé en ce que l'axe (12) comporte au moins une collerette (32) formant butée circulaire d'appui pour une surface d'extrémité d'un manchon.

6. Réservoir selon l'une des revendications 2 à 5, caractérisé en ce que les cloisons intérieures (15) ménagent, en regard des surfaces supérieure (5) et inférieure (6), des espaces libres (17, 16) permettant l'équilibrage des niveaux d'huile et portent des trous (18) pour la circulation de l'huile.

7. Réservoir selon l'une des revendications précédentes, caractérisé en ce que la face supérieure (5) du réservoir comporte une ouverture permettant d'assurer le contrôle des soudures et le nettoyage et présentant une surface d'appui (33) plane destinée à recevoir un joint et le couvercle (34).

8. Réservoir selon l'une des revendications précédentes, caractérisé en ce que l'organe de fixation (7) prévu à la partie supérieure est constitué d'une chape, fixée au réservoir, recevant un axe coopérant avec une extrémité d'une biellette (40) dont l'autre extrémité coopère avec une chape fixée sur le carter du moteur, et en ce que les organes de fixation (8, 9) situés à la partie inférieure coopèrent avec des chapes (42, 41) fixées sur le carter du moteur.

## Claims

1. Reservoir with an antivibratory suspension and more particularly an oil reservoir intended to be secured on the casing of a turbo jet engine having the shape of a volume approximately inscribed within the frustum of a quadrangular prism comprising two large opposed faces (3, 4) of which the one (3) is disposed concentrically with the casing and proximity thereof, and connected by lateral faces (10, 11) and by upper (5) and lower (6) faces, the said reservoir comprising a securing member (7) at the upper part of the reservoir and two securing members (8, 9) at the lower part characterised in this that the upper (5) and lower (6) faces are parallel to the axis of the turbo jet engine and the two securing members (8a) disposed at the lower part are situated on the lateral faces (10, 11) carried by the ends of a shaft (12) parallel to the axis of the turbo jet engine, traversing the reservoir right through, and cooperating through the intermediary of resilient holding means with a tubular passage (13) rigid with at least lateral faces (10, 11) the said resilient holding means being constituted by at least two bushes (27) of resilient material, surrounding the shaft (12) and held spaced apart by a tubular distance piece (28) sliding on the shaft (12) and provided with circular abutments (29) forming contacts on the end surfaces of the bushes (27), axial displacement means (30, 31) of the bushes and of the distance piece being provided at one end of the shaft (12).

2. Reservoir according to claim 1, characterised in this that the lateral faces (10, 11) supporting cylindrical rings (25, 24) through which pass and are secured the ends of the tubular passage (13).

3. Reservoir according to claim 1, characterised in this that it comprises at least one internal division (15) perpendicular to the large faces (3, 4), secured on ribs (14) supported by the internal walls of the large faces (3, 4), on planes perpendicular to the faces (3, 4), the said division comprising at its lower part an opening (19) provided with a cylindrical ring (20) through which passes and is secured the tubular passage (13).

4. Reservoir according to claim 2 or claim 3, characterised in this that the resilient bushes (27) are of a length approximately equal to that of the cylindrical ring and are disposed within the tubular passage (13) at right angles to the cylindrical rings (20 ; 25, 24).

5. Réservoir according to one of the preceding claims, characterised in this that the shaft (12) comprises at least one collar (32) forming a circular abutment for the support for one end of one bush.

6. Reservoir according to one of claims 2 to 5, characterised in this that the internal divisions (15) define, opposite to the upper (5) and lower (6) surfaces, free spaces (17, 16) enabling equalisation of the oil levels and provided with holes (18) for the circulation of the oil.

7. Reservoir according to one of the preceding claims, characterised in this that the upper face (5) of the reservoir comprises an opening enabling the control of welas and cleaning and having a plane support surface (33) intended to receive a seal and the cover (34).

8. Reservoir according to one of the preceding claims, characterised in this that the securing member (7) provided at the upper part and constituted by a clevis, secured to the reservoir, recieves a shaft cooperating with one end of a rod (40) of which the other end cooperates with a clevis secured to the engine casing, and in this that the securing members (8, 9) situated in the lower part cooperate with clevises (42, 41) secured on the engine casing.

**Ansprüche**

1. Behälter mit schwingungsdämpfender Aufhängung und insbesondere Ölbehälter, der zur Befestigung am Gehäuse eines Turboluftstrahltriebwerks bestimmt ist, in Form eines Volumens annähernd einbeschrieben in einen vierkantigen Prismenstumpf mit zwei entgegengesetzten Flächen (3, 4), von denen die eine (3) konzentrisch zum Gehäuse und in seiner Nachbarschaft angeordnet ist, und durch Seitenflächen (10, 11) sowie durch eine obere Fläche (5) und eine untere Fläche (6) verbunden sind, welcher Behälter ein Befestigungsorgan (7) am oberen Teil des Behälters und zwei Befestigungsorgane (8, 9) am unteren Teil aufweist, dadurch gekennzeichnet, daß die obere Fläche (5) und die untere Fläche (6) parallel zur Achse des Turboluftstrahltriebwerks sind und die beiden Befestigungsorgan (8, 9), die am unteren Teil vorgesehen sind, sich auf den Seitenflächen (10, 11) befinden, welche von den Enden einer Achse (12) getragen werden, die zur Achse des Turboluftstrahltriebwerks parallel its, die den Behälter von der einen Seite zur anderen durchquert und mittels elastischer Lagerungsmittel mit einem rohrförmigen Kanal (13) zusammenwirkt, der mit mindestens den Seitenflächen (10, 11) fest verbunden ist, welche elastischen Lagerungsmittel gebildet werden durch mindestens zwei Hülsen (27) aus elastischem Material, welche die Achse (12) umhüllen und durch ein rohrförmiges Zwischenstück (28) getrennt gehalten werden, das auf der Achse (12) gleitet und mit kreisförmigen Anschlägen (29) versehen ist, die als Abstützung der Endflächen der Hülsen (27) dienen, wobei Mittel zur axialen verlagerung (30, 31) der Hülsen und des Zwischenstücks an dem einen Ende der Achse (12) vorgesehen sind.

2. Behälter nach Anspruch 1, dadurch gekennzeichnet, daß die Seitenflächen (10, 11) zylindrische Ringe (25, 24) tragen, durch welche die Enden des rohrförmigen Kanals (13) geführt und in diesen befestigt sind.

3. Behälter nach Anspruch 1, dadurch gekennzeichnet, daß er mindestens eine innere Trennwand (15) trägt, die zu den großen Flächen (3, 4) senkrecht ist, welche an Rippen (14) befestigt sind, die von den Innenwänden der großen Flächen (3, 4) nach Ebenen getragen werden, die zu den Flächen (3 und 4) senkrecht sind, welche Trennwand an ihrem unteren Teil eine Öffnung (19) aufweist, die mit einem zylindrischen Ring (20) versehen ist, in welchem sich der rohrförmige Kanal (13) erstreckt und befestigt ist.

4. Behälter nach Anspruch 2 oder nach Anspruch 3, dadurch gekennzeichnet, daß die elastischen Hülsen (27) von einer Länge sind, die annähernd gleich derjenigen des zylindrischen Ringes ist, und in dem rohrförmigen Kanal (13) an der Stelle der zylindrischen Ringe (20 ; 25, 24) angeordnet sind.

5. Behälter nach einem der vorangehenden Ansprüche, dadurch gekennzeichnet, daß die Achse (12) mindestens einen Bund (32) aufweist, der einen kreisförmigen Abstützanschlag für eine Endfläche einer Hülse bildet.

6. Behälter nach einem der Ansprüche 2 bis 5, dadurch gekennzeichnet, daß die inneren Trennwände (15) gegenüber der oberen Fläche (5) und der unteren Fläche (6) Freiräume (17, 16) bilden, welche die Angleichung der Ölspiegel ermöglichen und Öffnungen (18) für die Ölzirkulation tragen.

7. Behälter nach einem der vorangehenden Ansprüche, dadurch gekennzeichnet, daß die obere Fläche (5) des Behälters eine Öffnung aufweist, welche es ermöglicht, die Kontrolle der Schweissungen und der Reinigung sicherzustellen und eine ebene Abschnittsfläche (33) aufweist, die zur Aufnahme einer Dichtung und des Deckels (34) bestimmt ist.

8. Behälter nach einem der vorangehenden Ansprüche, dadurch gekennzeichnet, daß das am oberen Teil vorgesehene Befestigungsorgan (7) durch ein Blech gebildet wird, das am Behälter befestigt ist, eine Achse aufnimmt, welche mit einem Ende eines Schwingarms (40) zusammenwirkt, dessen anderes Ende mit einem Blech zusammenwirkt, das am Gehäuse des Motors befestigt ist, und daß die Befestigungsorgane (8, 9), die sich am unteren Teil befinden, mit Blechen (42, 41) zusammenwirken, die am Gehäuse des Motors befestigt sind.

0 043 299

FIG.:3

FIG.:1

FIG.: 2

0 043 299

FIG.:4

FIG.: 5